# EUROPÄISCHE PATENTSCHRIFT

(11) **EP 3 479 999 B1**
(45) Veröffentlichungstag und Bekanntmachung des Hinweises auf die Patenterteilung: **24.02.2021**
(21) Anmeldenummer: 18201961.2
(22) Anmeldetag: 23.10.2018
(51) Int. Cl.: B29C 64/209, B29C 64/241, B29C 64/321, B29C 64/118, B33Y 30/00, B33Y 40/00, B23Q 3/00

(54) **3D-DRUCKVORRICHTUNG**
3D PRINTER
DISPOSITIF D'IMPRESSION TRIDIMENSIONNELLE

(30) Priorität: 07.11.2017 DE 102017125993
(43) Veröffentlichungstag der Anmeldung: 08.05.2019
(73) Patentinhaber: Hertsch, Wolfgang, 63477 Maintal (DE)
(72) Erfinder: Hertsch, Wolfgang, 63477 Maintal (DE)
(74) Vertreter: Fritz, Edmund Lothar

(56) Entgegenhaltungen:
- EP-A1- 3 456 533
- DE-A1-102015 116 925
- US-A1- 2007 003 656
- US-A1- 2017 129 180

## Beschreibung

Die vorliegende Erfindung betrifft eine 3D-Druckvorrichtung nach Anspruch 1.

Aus dem Stand der Technik ist die so genannte Schmelzschichtung (Fused Deposition Modeling) als Variante des 3D-Drucks bekannt, bei der das Werkstück schichtweise aus einem schmelzfähigen Kunststoff aufgebaut wird. Dabei wird das Ausgangsmaterial in der Regel in Form eines Schweißdrahts aus Kunststoff zugeführt, der durch Erwärmen aufgeschmolzen und der Düse eines Druckkopfs zugeführt wird, ähnlich wie beim Schweißextrudieren. Der geschmolzene Kunststoff tritt aus dem Druckkopf aus, welcher für jede Schicht die Form des zu erstellenden Werkstücks abfährt, so dass das Werkstück schichtweise aufgebaut wird, wobei sich der schmelzflüssige Kunststoff der neuen Schicht jeweils mit demjenigen des erkaltenden Materials der zuvor erstellten Schicht stoffschlüssig verbindet. In der Regel wird bei dieser Technik der Werkstücktisch, auf dem das Werkstück abgelegt ist, in X-Richtung und in Y-Richtung bewegt, während der Druckkopf in Z-Richtung verfährt.

Aus dem Stand der Technik ebenfalls bekannt sind CNC-gesteuerte Arbeitsmaschinen, beispielsweise Fräsmaschinen, bei denen ein Werkzeug mittels einer Spindel rotierend angetrieben wird und mittels dieses Werkzeugs ein Werkstück spanend bearbeitet wird. Herkömmliche 3D-Druckvorrichtungen sind mit einem eigenem Antrieb und eigener Steuerung für die Bewegung des Druckkopfs und des Werkstücktisches ausgerüstet. Diese 3D-Druckmaschinen sind vergleichsweise teuer. Bei einer CNC-gesteuerten Werkzeugmaschine wird in "negativer" Z-Richtung gearbeitet, das heißt, es wird Material von dem Werkstückabgetragen. Beim 3D-Druck wird hingegen in positiver Z-Richtung gearbeitet, da das Werkstück schichtweise aufgebaut wird.

In der WO 2015/175937 A1 wird vorgeschlagen, ein austauschbares Werkzeug zur Verfügung zu stellen, welches in der Lage ist, einen Extrusionsvorgang nach dem Prinzip des 3D-Drucks durchzuführen, wobei dieses Werkzeug anstelle eines spanenden Werkzeugs an eine CNC-Maschine anzuschließen. Auf diese Weise können die Steuerung und der Antrieb für den Vorschub der CNC-Maschine über eine spezielle Software genutzt werden. Dazu wird in dieser Druckschrift vorgeschlagen, eine Haltevorrichtung zu verwenden, mittels derer der Druckkopf an die Spindel der CNC-Maschine gekoppelt wird, sowie einen an dieser Haltevorrichtung befestigten Generator, welcher aus der Rotationsbewegung der Spindel Strom generiert und einen Mikroprozessor, welcher die Bewegung des Extruders entsprechend der Rotationsgeschwindigkeit der Spindel der CNC-Maschine steuert. Da bei dieser bekannten Vorrichtung ein Generator benötigt wird, welcher Strom erzeugt, mittels dessen dann wiederum ein Schrittmotor angetrieben wird, sowie ein Mikroprozessor, der über die Rotation der Spindel Befehle erzeugt, über die der Betrieb des Extruders gesteuert wird, sowie weiterhin eine Kupplung zwischen dem Drehantrieb der Spindel und dem Schrittmotor für den Vorschub des Schweißdrahts, damit man die Verbindung trennen kann, ist die bekannte Vorrichtung vergleichsweise aufwändig und kostspielig.

In der DE 10 2015 116 925 A1 wird ein Verfahren zur Herstellung von Kunststoffformteilen mit komplexen Geometrien beschrieben, bei dem das Werkstück im additiven Verfahren aufgebaut wird, wobei Granulat in einer als Schneckenextruder ausgeführten Plastifiziereinheit aufgeschmolzen und dann über eine Düsenspitze ausgebracht wird. Die Schneckenwelle kann über eine Steilkegelaufnahme mit einem Werkzeugantrieb gekuppelt werden. Die Plastifiziereinheit ist über eine Kupplung lösbar mit dem Werkzeugantrieb verbunden, wobei es sich um einen Elektromotor handelt, der ein Getriebe aufweist. Die Rotationsbewegung des Antriebs führt jedoch bei dieser bekannten Vorrichtung wiederum zu einer Rotationsbewegung der Schneckenwelle der Plastifiziereinheit. Es wird hier kein Schweißdraht zugeführt, sondern Granulat, welches in dem Schneckenextruder plastifiziert wird.

Die US 2014/0159273 A1 beschreibt eine 3D-Druckvorrichtung, bei der ein Schweißdraht über eine Einzugsvorrichtung zugeführt wird. Die Einzugsvorrichtung umfasst Zahnräder, die den Schweißdraht erfassen und transportieren. Als Antrieb dient hier ein Elektromotor, der eine Schnecke eines Schneckengetriebes antreibt, wobei die Antriebsachse der Schnecke in einem rechten Winkel zu einem Schneckenrad ausgerichtet ist, über das zwei Zahnräder der Einzugsvorrichtung angetrieben werden. Mittels des Schneckengetriebes wird hier eine starke Untersetzung zur Antriebswelle des Elektromotors erreicht. Bei dieser 3D-Druckvorrichtung ist jedoch ein Anschluss an den Antrieb einer Werkzeugmaschine nicht vorgesehen.

US 2017/129180 A1 offenbart einen Extrusionskopf, der mit einer CNC-Maschine verbunden ist.

Die Aufgabe der vorliegenden Erfindung besteht daher darin, eine 3D-Druckvorrichtung mit den Merkmalen der eingangs genannten Gattung zur Verfügung zu stellen, die einfacher aufgebaut ist und mit geringerem Aufwand ein Anschließen eines 3D-Druckkopfs an eine CNC-Maschine ermöglicht.

Die Lösung der vorgenannten Aufgabe liefert eine 3D-Druckvorrichtung der eingangs genannten Art mit den Merkmalen des Anspruchs 1.

Erfindungsgemäß ist vorgesehen, dass über zwischen die rotierende Spindel und die Einzugsvorrichtung für den Schweißdraht geschaltete Getriebemittel die Rotationsbewegung der Spindel direkt in eine Vorschubbewegung des Schweißdrahts umgewandelt wird.

Die erfindungsgemäße Lösung unterscheidet sich somit von dem eingangs zitierten Stand der Technik darin, dass die Antriebsenergie der rotierenden Spindel der CNC-Maschine unmittelbar genutzt wird, um auch den Schweißdraht in den Extruderbereich des Druckkopfs einzuziehen. Somit ergibt sich eine direkte Proportionalität zwischen der Anzahl der Umdrehungen der Spindel pro Zeiteinheit und der Anzahl der Umdrehungen der Einzugsvorrichtung für den Schweißdraht und somit der Fördergeschwindigkeit, mit der der Schweißdraht dem Druckkopf des 3D-Druckers zugeführt wird.

Die erfindungsgemäße Lösung hat damit den Vorteil, dass man für den Vorgang des Einziehens des Schweißdrahtes keinen eigenen Motor benötigt. Im Stand der Technik wird hierfür ein Elektromotor, insbesondere ein Schrittmotor verwendet, mittels dessen man beispielsweise eine Rolle antreibt, von der der Schweißdraht abgewickelt wird. Die erfindungsgemäße Lösung hat den weiteren Vorteil, dass man für die Regelung der Geschwindigkeit des Vorschubs des Schweißdrahtes keine eigene Steuerung benötigt, sondern den Drahtvorschub allein über die Drehzahl der Spindel der CNC-Maschine bestimmt.

Weiterhin ist bei der erfindungsgemäßen Lösung vorteilhaft, dass man die für den 3D-Druck benötigte Extrusionsvorrichtung mit Druckkopf quasi unmittelbar an eine CNC-Maschine montieren kann, ähnlich wie bei einem Werkzeugwechsel, so dass auch die Umstellung der CNC-Maschine von einem spanenden Werkzeug auf 3D-Druck in einem raschen einfach zu bewerkstelligen Montagevorgang erfolgen kann. Von Vorteil ist auch, dass in vielen auch kleineren Betrieben häufig eine CNC-Maschine, beispielsweise eine Fräsmaschine vorhanden ist und diese in einfacher Weise in eine 3D-Druckvorrichtung umfunktioniert werden kann, ohne dass ein kostspieliger 3D-Drucker angeschafft werden muss.

Vorzugsweise sieht eine Weiterbildung der Erfindung vor, dass die Antriebsachse des Spindelantriebs der rotierenden Spindel der CNC-Maschine gleich oder parallel ausgerichtet ist zur Förderrichtung des Schweißdrahts im Bereich vor dem Druckkopf. Dies ist anders als bei der aus US 2014/0159273 A1 bekannten Vorrichtung, wo ein separater Elektromotor als Antrieb genutzt wird, dessen Antriebsachse rechtwinklig zur späteren Förderrichtung des Schweißdrahts verläuft, so dass zunächst eine Richtungsumlenkung um 90° über ein Schneckengetriebe notwendig ist. Die erfindungsgemäße Vorrichtung hat demgegenüber den wesentlichen Vorteil, dass sie keine separate Antriebsvorrichtung benötigt, sondern der vorhandene Antrieb der Spindel einer CNC-Maschine direkt für das Fördern des Schweißdrahtes zum Druckkopf genutzt werden kann. Die erfindungsgemäße Lösung ist somit kostengünstig und platzsparend.

Da die Spindel der CNC-Maschine mit einer vergleichsweise hohen Drehzahl angetrieben wird, verwendet man vorzugsweise Getriebemittel mit mindestens einer Untersetzungsstufe.

Es ist also vorzugsweise so, dass eine mit der Drehzahl der Spindel rotierende Antriebswelle mittels der mindestens einen Untersetzungsstufe eine mit geringerer Drehzahl als die Spindel rotierende Abtriebswelle antreibt. Für diesen Zweck kann man beispielsweise ein Zahnradgetriebe verwenden. Ein erstes kleineres Zahnrad befindet sich dabei zum Beispiel auf einer ersten Welle (Antriebswelle), welche mit der Drehzahl der Spindel rotiert und ein zweites größeres Zahnrad befindet sich auf einer zweiten Welle (Abtriebswelle), so dass die Abtriebswelle langsamer rotiert als die Antriebswelle bzw. die Spindel.

Gemäß einer möglichen bevorzugten Weiterbildung der Erfindung umfassen die Getriebemittel mindestens zwei miteinander kämmende Kegelräder. Derartige Kegelräder ermöglichen beispielsweise eine Richtungsumlenkung der Rotationsachsen um 90 °. Auf diese Weise ist es möglich, die Rotationsbewegung der Spindel der Werkzeugmaschine so umzulenken, dass sie beispielsweise eine oder mehrere Andruckrollen antreibt, mittels derer der Schweißdraht eingezogen wird, wobei sich die Achse der Andruckrolle in einem Winkel von beispielsweise etwa 90 ° zur Rotationsachse der Spindel erstreckt.

Eine vorteilhafte Weiterbildung der Erfindung sieht vor, dass die Getriebemittel mindestens eine erste Untersetzungsstufe sowie mindestens eine dieser nachgeschaltete zweite Untersetzungsstufe umfassen. Es können auch mehr als zwei solcher Untersetzungsstufen vorhanden sein, um die vergleichsweise hohe Drehzahl der rotierenden Spindel auf die benötigte niedrigere Drehzahl für das Einziehen des Schweißdrahts zu reduzieren.

Gemäß einer bevorzugten Weiterbildung der Erfindung umfasst die Einzugsvorrichtung für den Schweißdraht wenigstens ein Paar Andruckrollen, welche den Schweißdraht erfassen und eine lineare Vorschubbewegung des Schweißdrahts erzeugen. Diese Lösung ist deshalb besonders praktisch, weil man so über die Getriebemittel die Rotationsbewegung der Spindel in eine Rotationsbewegung der Andruckrolle umwandeln kann, die den Schweißdraht quasi klemmend erfasst und linear transportiert. Das Gebinde, auf der sich der Schweißdraht ursprünglich befindet, zum Beispiel kann dieser auf einer Vorratsrolle aufgewickelt sein, muss man dann nicht antreiben. Die Andruckrollen erfassen vielmehr den Schweißdraht und ziehen ihn von der Vorratsrolle ab. Die Vorschubgeschwindigkeit des Schweißdrahts kann über eine Software entsprechend der Geschwindigkeit erfolgen, mit der der aufzuschmelzende Kunststoff an der Extrusionsvorrichtung des Druckkopfs benötigt wird.

Eine mögliche konkrete konstruktive Ausgestaltung sieht beispielsweise vor, dass mindestens zwei Paar Andruckrollen mit zueinander parallelen beabstandeten Drehachsen vorhanden sind, die eine lineare Vorschubbewegung des Schweißdrahts erzeugen. Den Antrieb dieser Andruckkrollen kann man beispielsweise miteinander koppeln, über ein Zahnrad oder ähnliche Getriebeelemente, so dass der Schweißdraht quasi an zwei Stellen jeweils von den Andruckrollen reibschlüssig erfasst und in Richtung auf den Druckkopf transportiert wird.

Gemäß einer möglichen Weiterbildung der Erfindung kann man beispielsweise einen Gegenhalter zwischen Druckkopf und angetriebener Spindel anordnen, welcher ein Mitdrehen des Druckkopfs bei Rotation der Spindel verhindert. Der Druckkopf ist somit stationär, während sich die Spindel dreht und die Andruckrollen für den Einzug des Schweißdrahts unmittelbar antreibt.

Die Koordination der Bewegung des Werkstücktisches, auf dem sich das Werkstück befindet kann bei der erfindungsgemäßen Lösung über die ohnehin bei einer CNC-Maschine vorhandene Steuerung erfolgen, wobei man dazu eine geeignete Software verwendet. Der Werkstücktisch bewegt sich in der Regel in X- und Y-Richtung, während das Verfahren in Z-Richtung über eine entsprechende Bewegung des Druckkopfs erfolgt, während anders als bei einer Fräsmaschine sich der Druckkopf bei jeder neuen Schicht, die durch Extrusion auf das Werkstück aufgetragen wird, vom Werkstück weg bewegt. Der Teil, der den Druckkopf umfasst, muss somit nur an der CNC-Maschine so montiert werden, dass sich der Druckkopf jeweils mit der Spindel in Z-Richtung bewegt, nachdem eine Schicht fertiggestellt wurde. Beim 3D-Druck dient in der Regel eine auf dem Werkstücktisch angeordnete Heizplatte zur Erwärmung des Werkstücks, um zu verhindern, dass dieses zu schnell erkaltet und dadurch eine stoffschlüssige Verbindung zwischen der zuvor extrudierten und der schmelzflüssig neu aufgebrachten Schicht des Werkstücks verhindert wird. Hier tritt bei bekannten 3D-Druckvorrichtungen das Problem auf, dass sich nach dem Druckvorgang das fertige Werkstück nur mit Schwierigkeiten von der Heizplatte lösen lässt. Um dieses Problem zu überwinden schlägt eine Weiterbildung der Erfindung vor, eine Trennfolie zu verwenden, auf der das Werkstück aufliegt, so dass diese Trennfolie zwischen Heizplatte und Werkstück angeordnet ist. Folglich haftet das Werkstück nicht mehr mit seiner Unterseite direkt auf der Heizplatte, die Trennfolie lässt sich leicht von der Heizplatte abnehmen und das Werkstück lässt sich problemlos von der Trennfolie lösen.

Um zu verhindern, dass sich durch die Aufheizung im Bereich des Druckkopfs Wärme nach oben hin ausbreitet und dadurch der Schweißdraht bereits im Bereich der Einzugsvorrichtung erwärmt wird und erweicht, ist zwischen der Einzugsvorrichtung für den Schweißdraht und dem Druckkopf eine Kühlvorrichtung angeordnet. Dadurch wird eine thermische Trennung zwischen Einzugsvorrichtung und Heizvorrichtung/Druckkopf erzielt.

Vorzugsweise ist gemäß einer alternativen Variante der Erfindung der Kühlvorrichtung ein Lüfter zugeordnet, welcher einen Luftstrom auf die Kühlvorrichtung bläst. Die Kühlvorrichtung kann beispielsweise Rippen aufweisen, um eine Luftkühlung zu erzielen, wobei der Kühleffekt durch den Lüfter verstärkt wird. Somit wird effektiv verhindert, dass Wärme der Heizvorrichtung aus dem Bereich des Druckkopfs auf einen Bereich der Einzugsvorrichtung übertragen wird, in dem der Schweißdraht gefördert wird, da vermieden werden muss, dass es in dem Einzugsbereich zu einer Erweichung des Schweißdrahts kommt.

Die in den Unteransprüchen genannten Merkmale beziehen sich auf bevorzugte Ausführungsformen der Erfindung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher erläutert. Dabei zeigen:
Figur 1 eine schematisch vereinfachte Ansicht der an den unteren Bereich der Werkzeugmaschine angebauten 3D-Druckvorrichtung gemäß einer beispielhaften Ausführungsvariante der vorliegenden Erfindung;
Figur 2 eine vergrößerte Detailansicht im Bereich der Einzugsvorrichtung für den Schweißdraht;
Figur 3 eine schematische Darstellung des Getriebes für die Übertragung der Rotationsbewegung von der Spindel auf die Einzugsvorrichtung;
Figur 4 eine schematisch vereinfachte perspektivische Ansicht des Werkstücktisches einer erfindungsgemäßen 3-D-Druckvorrichtung;
Figur 5 eine schematisch vereinfachte seitliche Teilansicht einer 3D-Druckvorrichtung gemäß einer beispielhaften alternativen Ausführungsvariante der vorliegenden Erfindung;
Figur 6 eine perspektivische Teilansicht der Vorrichtung im teilweise demontierten Zustand ohne den Gegenhalter;
Figur 7 eine weitere perspektivische Ansicht mit der Spindel und dem teilweise montierten Gegenhalter;
Figur 8 eine weitere perspektivische Ansicht mit vollständig montiertem Gegenhalter.

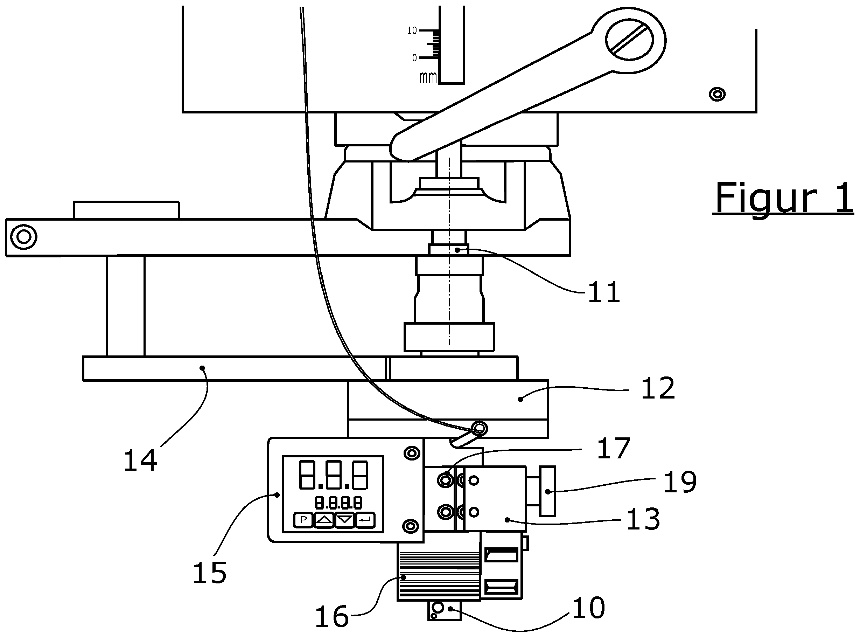

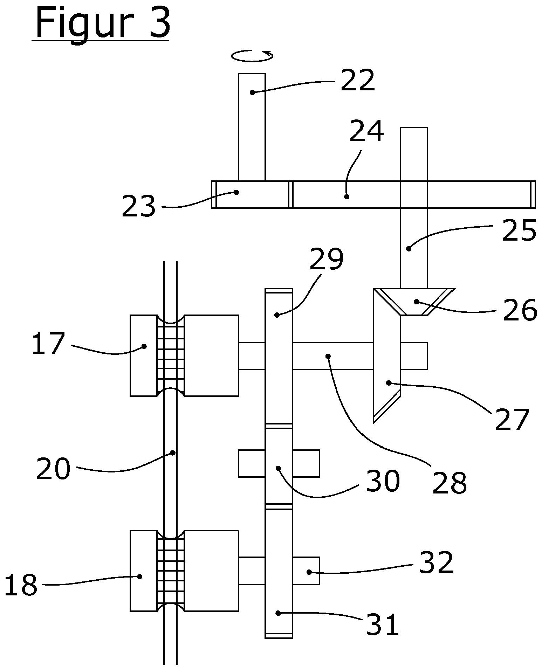

Nachfolgend wird zunächst unter Bezugnahme auf die Figur 1 ein Ausführungsbeispiel der vorliegenden Erfindung näher erläutert. Die Darstellung gemäß Figur 1 zeigt den unteren Teil einer CNC-Fräsmaschine, an die ein Druckkopf 10 und weitere Bauteile für den 3D-Druck angebaut wurden, wodurch die CNC-Fräsmaschine in eine 3D-Druckvorrichtung umfunktioniert wurde. Die CMC-Fräsmaschine umfasst eine rotierend angetriebene Spindel, über die beim herkömmlichen Fräsvorgang ein Fräswerkzeug angetrieben wird, welches dann ein Werkstück spanend bearbeitet. Anstelle eines solchen Fräswerkzeugs wird bei der erfindungsgemäßen 3D-Druckvorrichtung von der Spindel 11 ein Antriebsrad einer Gewindeeinheit angetrieben, welches in Figur 1 nicht erkennbar ist, da es in einem Getriebegehäuse 12 untergebracht ist. Über eine Untersetzung mit diversen Zahnrädern, wird wie später noch anhand von Figur 3 näher erläutert wird, eine Einzugsvorrichtung 13 für einen Schweißdraht aus Kunststoff angetrieben, so dass der Schweißdraht mit einer vorgegebenen Geschwindigkeit, die von der Rotationsgeschwindigkeit der Spindel 11 abhängt, angetrieben wird.

Dieser Schweißdraht aus Kunststoff wird mittels einer Heizvorrichtung, die sich in dem Druckkopf 10 befindet, aufgeschmolzen, so dass aus dem Druckkopf geschmolzener Kunststoff austritt, welcher wiederum ein Werkstück aus Kunststoff, das auf einem Werkstücktisch abgelegt ist, schichtweise dreidimensional druckt. Dazu kann der Druckkopf 10 in vertikaler Richtung, d.h. in Z-Richtung verfahren werden, jeweils nachdem eine Schicht des Werkstücks fertiggestellt ist. Die Steuerung dieser vertikalen Bewegung des Druckkopfs 10 geschieht über die Steuerung der CNC-Maschine. Außerdem wird während des Druckvorgangs das Werkstück in X-Richtung und quer dazu in Y-Richtung bewegt, was dadurch geschieht, dass der Werkstücktisch in X-Richtung und Y-Richtung bewegt wird, was ebenfalls über die Steuerung der CNC-Maschine erfolgen kann. Die Voraussetzung für die Bewegungen des Werkstücktisches in X-Richtung und Y-Richtung sind bereits bei der CNC-Maschine vorgegeben. Für die erfindungsgemäße 3D-Druckvorrichtung bedarf es lediglich einer speziellen Software, über die die Bewegungen der Maschine in den drei Raumrichtungen so gesteuert werden können, wie dies für einen 3D-Druckvorgang erforderlich ist.
Um zu verhindern, dass sich Teile des Getriebegehäuses 12, der Einzugsvorrichtung 13 und des Druckkopfs 10 mitdrehen, wenn das Getriebe über die Spindel 11 angetrieben wird, ist ein Gegenhalter 14 vorgesehen, der diejenigen Bauteile, die nicht rotieren sollen, festspannt.

Die 3D-Druckvorrichtung umfasst weiterhin eine Anzeigevorrichtung 15 für die Anzeige beispielsweise der Temperatur im Druckkopf sowie gegebenenfalls weiterer Werte, die für den 3D-Druckvorgang von Bedeutung sind und der Bedienungsperson angezeigt werden. Zwischen der Einzugsvorrichtung 13 und dem heißen Druckkopf 10 ist eine Kühlvorrichtung 16 angeordnet, um zu verhindern, dass sich der einzuziehende Kunststoffschweißdraht bereits im Bereich der Einzugsvorrichtung erwärmt und so frühzeitig erweicht.

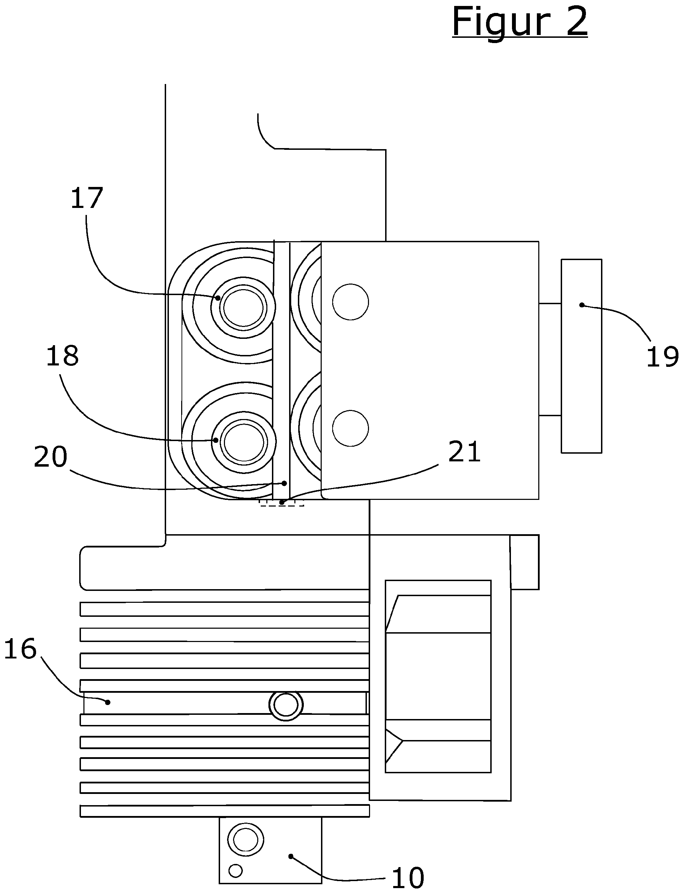

Nachfolgend wird auf die vergrößerte Darstellung gemäß Figur 2 Bezug genommen, aus der weitere Einzelheiten der Einzugsvorrichtung 13 für den Kunststoffschweißdraht ersichtlich sind. Man erkennt hier, dass die Einzugsvorrichtung 13 zwei Paar jeweils paarweise nebeneinander angeordnete und zusammenwirkende Andruckrollen aufweist, die rotierend angetrieben werden, so dass der Schweißdraht über diese Andruckrollen durch Reibkraft mitgenommen und gefördert wird. Die genaue Position der Andruckrollen 17, 18 kann über ein Stellrad 19 verstellt werden. Der Schweißdraht 20 wird von den Andruckrollen 17, 18 so eingezogen, dass er sich in der Darstellung von Figur 2 linear von oben nach unten und in Richtung auf den Druckkopf 10 bewegt. Auf diese Weise wird der Schweißdraht 20 durch die Öffnung 21 nach unten hin gefördert und gelangt durch die Kühlvorrichtung 16 hindurch nach unten hin in den Bereich des Druckkopfs 10, wo der Schweißdraht 20 über eine Heizvorrichtung aufgeschmolzen wird. Aus dem Druckkopf 10 tritt geschmolzener Kunststoff nach unten hin aus, wobei dieser Extrudat dann schichtweise auf dem Werkstück abgelegt wird, wobei der Druckkopf beim Aufbau jeder Schicht immer jeweils die gesamte Kontur des Werkstücks abfährt. Letzteres geschieht jedoch durch die Bewegung des Werkstücktisches, auf dem das Werkstück aufliegt und fixiert ist, während der Druckkopf 10 keine Bewegungen in X-Richtung oder Y-Richtung vollführt. Somit bewegt sich quasi das Werkstück unterhalb des feststehenden Druckkopfs, während der Druckkopf jeweils nur dann in Z-Richtung um einen kurzen Weg von in der Regel nur einem Bruchteil eines Millimeters, beispielsweise 0,4 mm nach oben verfährt, wenn jeweils eine Schicht des Werkstücks gedruckt wurde.

Nähere Einzelheiten betreffend den Aufbau des Getriebes ergeben sich aus der schematischen Darstellung gemäß Figur 3, auf die nachfolgend Bezug genommen wird. Die Antriebswelle 22 treibt ein erstes kleineres Zahnrad 23 einer ersten Untersetzungsstufe an, welches mit einem größeren Zahnrad 24 kämmt, so dass die Abtriebswelle 25 langsamer rotiert als die Antriebswelle 22, die von der hier nicht dargestellten Spindel 11 angetrieben wird. Auf dieser Abtriebswelle 25 befindet sich ein erstes kleineres Kegelrad 26, welches mit einem zweiten größeren Kegelrad 27 kämmt, welches sich wiederum auf einer Abtriebswelle 28 befindet, die sich aufgrund der Kegelräder rechtwinklig zu der Abtriebswelle 25 erstreckt. Durch diese beiden Kegelräder 26, 27 ergibt sich eine zweite Untersetzungsstufe und somit eine vergleichsweise langsame Drehung der Welle 28, auf der ich das Kegelrad 27 befindet. Mit Abstand zu diesem befindet sich auf der Welle 28 ein weiteres Zahnrad 29, welches wiederum mit einem Zwischenzahnrad 30 kämmt, über das ein weiteres Zahnrad 31 angetrieben wird, derart, dass die beiden Zahnräder 29 und 31 sich jeweils mit gleicher Geschwindigkeit drehen. Das Zahnrad 31 befindet sich auf einer Welle 32.

Auf der Welle 28 befindet sich eine erste Andruckrolle 17 eines ersten Paares von Andruckrollen und auf der Welle 32 befindet sich eine zweite Andruckrolle 18 eines zweiten Paares von Andruckrollen. Diese beiden Andruckrollen 17, 18 werden synchron angetrieben und da jeweils ein Paar Andruckrollen vorhanden ist, welches den Schweißdraht 20 klemmend erfasst, wird der Schweißdraht 20 eingezogen und in der Zeichnung nach unten hin in Richtung auf den Druckkopf gefördert.

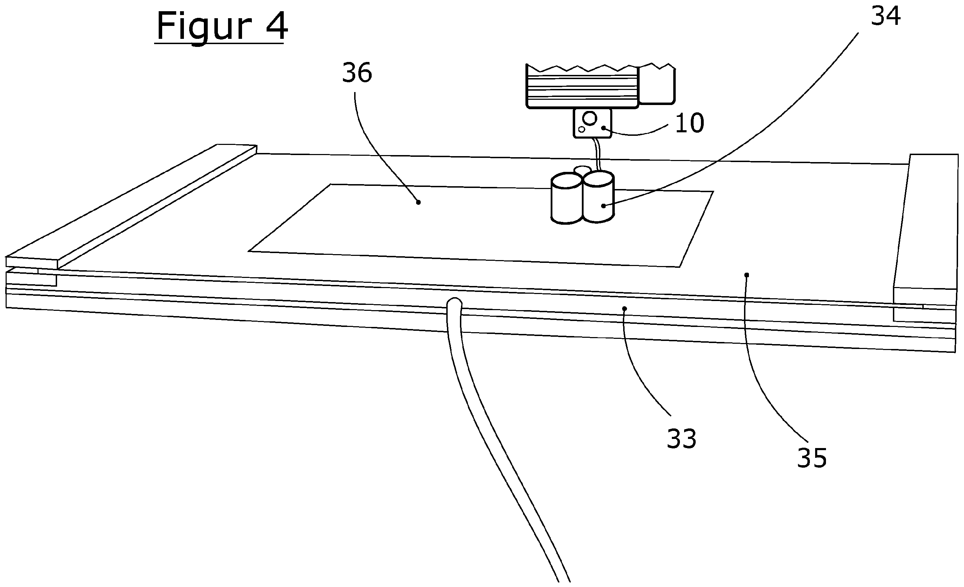

Figur 4 zeigt eine Ansicht des Werkstücktisches 33, auf dem das zu druckende Werkstück 34 abliegt und schichtweise aufgebaut wird. Bei herkömmlichen 3D-Druckvorrichtungen besteht das Problem darin, dass es häufig nach dem Druckvorgang Schwierigkeiten bereitet, das Werkstück 34 von dem Werkstücktisch 33 zu lösen, da dieses mit seiner Unterseite quasi auf dem Werkstücktisch festklebt. Auf dem Werkstücktisch 33 liegt in der Regel eine Heizpatte 35 auf, um das Werkstück zu erwärmen und ein zu schnelles Abkühlen des schichtweise aufgebrachten Kunststoffmaterials zu verhindern. Die vorliegende Erfindung schlägt als besondere Maßnahme vor, auf die Heizplatte 35 eine spezielle Trennfolie 36 aufzulegen. Diese Trennfolie 36 besteht aus einem geeigneten Material, an dem der erkaltete Kunststoff nicht oder nicht wesentlich haftet, so dass das fertig gedruckte Werkstück nach Beendigung des Druckvorgangs und nach Erkalten problemlos von dem Werkstücktisch gelöst werden kann.

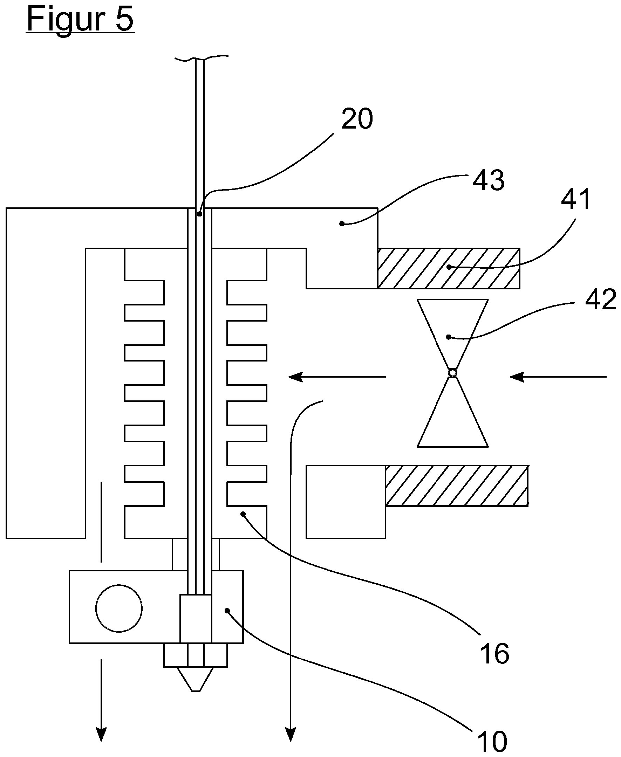

Nachfolgend wird unter Bezugnahme auf die Figur 5 eine beispielhafte alternative Ausführungsvariante einer erfindungsgemäßen 3D-Druckvorrichtung erläutert. Es ist in Figur 5 eine schematisch vereinfachte Teilansicht der Vorrichtung in der Seitenansicht dargestellt. Man erkennt die Einrichtung für die Zuführung des Schweißdrahts 20, der in axialer Richtung von oben nach unten hin durch eine erste Kühlvorrichtung 16 zum heißen unteren Bereich hin gefördert wird, in dem sich der Druckkopf 10 befindet. Diese erste Kühlvorrichtung 16 ist beispielsweise ein Rippenkühler oder dergleichen, der verhindert, dass die beim Aufschmelzen des Schweißdrahts im Bereich des Druckkopfs 10 anfallende Wärme nach oben hin übertragen wird, in den Bereich, in dem der Schweißdraht 20 zugeführt wird, da dieser dort noch nicht aufschmelzen soll.

Um die Kühlung zu verstärken, ist bei dieser Ausführungsvariante ein zusätzlicher Lüfter 42 vorgesehen, welcher mit etwas Abstand neben der Kühlvorrichtung 16 angeordnet ist und kühle Luft in Pfeilrichtung auf die Rippen der Kühlvorrichtung bläst, so dass hier die Kühlwirkung verstärkt wird. Der Lüfter 42 als zweite zusätzliche Kühlvorrichtung kann beispielsweise so angeordnet sein, dass die Lüfterachse etwa rechtwinklig zur Förderrichtung des Schweißdrahts verläuft, das heißt, in der Zeichnung verläuft die Lüfterachse in etwa horizontal, so dass die kühle Luft auf die Rippen der Kühlvorrichtung geblasen wird.

Der Lüfter 42 ist somit so angeordnet, dass er sich mit etwas Abstand neben dem Korpus der Kühlvorrichtung 16 befindet, durch die der Schweißdraht 20 gefördert wird. Für die Anbringung des Lüfters 42 ist dabei eine entsprechende Halterung 41 oberhalb und unterhalb des Lüfters 42 vorgesehen, an der der Lüfter und gegebenenfalls ein Motor für dessen Antrieb gelagert werden kann, wobei diese Halterung 41 an einem Element des Maschinengehäuses 43 in geeigneter Weise angebracht sein kann.

Der erfindungsgemäß verwendete Lüfter 42 hat den zusätzlichen Vorteil, dass der von diesem erzeugte Luftstrom quasi doppelt genutzt werden kann. Zum einen kühlt der Luftstrom des Lüfters die Rippen des Kühlers und verhindert so eine Erwärmung und ein Aufschmelzen des Schweißdrahts, welches in diesem Abschnitt der Vorrichtung unerwünscht ist. Im Bereich des Kühlers entsteht außerdem ein Luftstrom, der nach Umlenkung in einem Kanal des Kühlers etwa axial strömt und somit nach unten hin aus dem Kühler ausströmt und auf das gedruckte Objekt gerichtet ist, so dass zusätzlich das gedruckte Objekt selbst gekühlt wird.

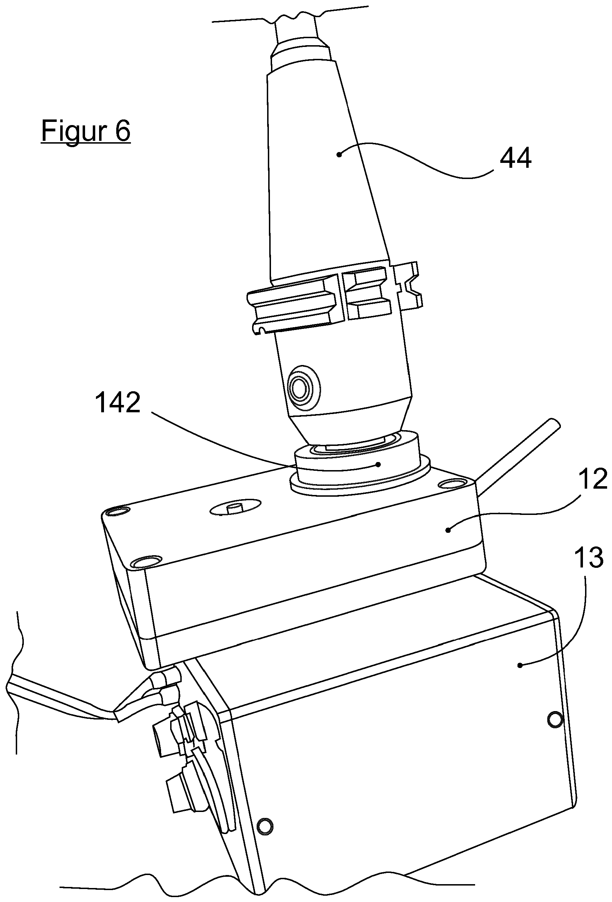

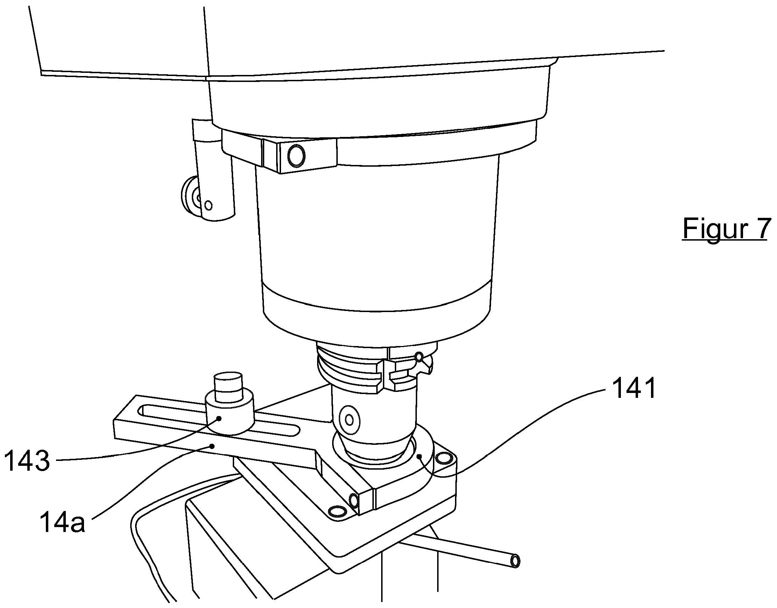

Nachfolgend wird unter Bezugnahme auf die Figuren 6 bis 9 die Funktion des als Drehmomentsperre dienenden Gegenhalters 14 näher erläutert. In Figur 6 sieht man den aus der Spindel herausgenommenen Steilkegel 44, bei dem es sich um Prinzip um ein genormtes Bauteil zum Spannen von Werkzeugen in der Spindel einer Werkzeugmaschine handelt. Da das Getriebe 12, die Einzugsvorrichtung 13 für den Schweißdraht, die Kühlvorrichtung und der Druckkopf (hier nicht sichtbar) an der Werkzeugaufnahme des Steilkegels aufgehängt sind, würden sich diese Bauteile bei Drehung der Spindel der Maschine mitdrehen. Um dies zu verhindern, ist der bereits in Figur 1 erkennbare Gegenhalter 14 vorgesehen, der wiederum aus mehreren Einzelteilen besteht und in Figur 7 im teilweise montierten Zustand dargestellt ist.

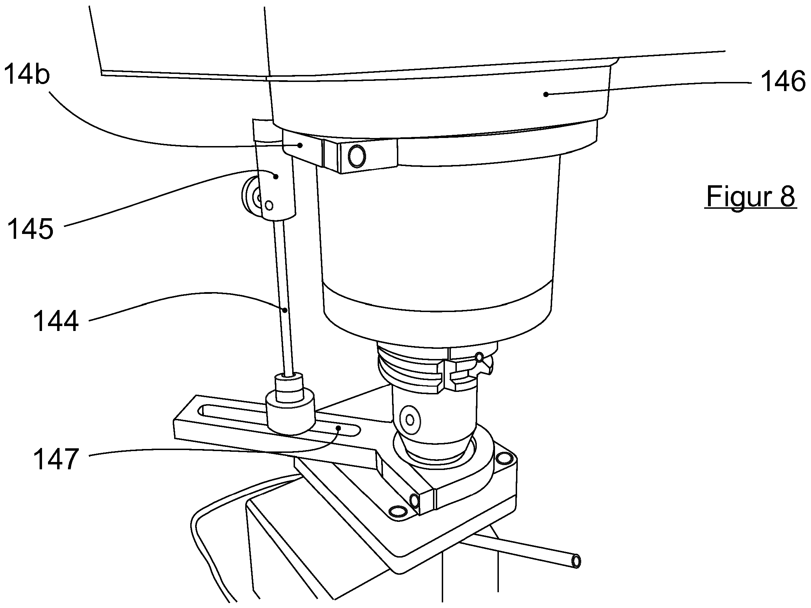

In Figur 7 sieht man das Unterteil 14 a des Gegenhalters, welches eine Klemmvorrichtung 141 umfasst, die um den in Figur 6 erkennbaren Ring 142 gelegt wird, wobei dieser beispielsweise mittels Schrauben in der Klemmvorrichtung 141 verklemmt wird. Das Unterteil 14 a weist einen Arm auf, der von der Klemmvorrichtung ausgehend sich radial nach außen hin erstreckt. An diesem Arm ist eine Hülse 143 befestigt, die das untere Ende einer vertikal und achsparallel in Bezug auf die Spindel verlaufenden Stange 144 (siehe Figur 8) aufnimmt. Das obere Ende dieser Stange 144 ist in einer weiteren Hülse 145 aufgenommen, welches wiederum an einem Oberteil 14 b des Gegenhalters befestigt ist. Dieses Oberteil 14 b umfasst eine weitere Klemmvorrichtung, die einen beispielsweise zylindrischen Abschnitt 146 des Maschinengehäuses umfasst und an diesem klemmend festgelegt wird, beispielsweise über Klemmschrauben oder dergleichen. Somit wird der sonst rotierende Teil über den Gegenhalter 14 drehfest an dem Maschinengehäuse festgelegt und wirkt als Drehmomentsperre.

Innerhalb des in Figur 6 erkennbaren Rings 142 verläuft konzentrisch die Antriebswelle 22 (siehe Figur 3), die quasi die Eingangswelle für das Getriebe der Einzugsvorrichtung 13 für das Einziehen des Schweißdrahts ist und die in der schematischen Darstellung gemäß Figur 3 erkennbar ist. Diese Antriebswelle 22 wird von der Spindel 11 der Werkzeugmaschine angetrieben (siehe Figur 1) und in Rotation versetzt. In Figur 6 erkennt man auch das Getriebegehäuse 12, innerhalb dessen sich das Getriebe mit einer Anordnung von Zahnrädern befindet, wie sie beispielsweise schematisch in Figur 3 dargestellt ist. Der Sinn der Drehmomentsperre über die Klemmvorrichtung 141 besteht somit darin, zu verhindern, dass sich, bei Drehung der Antriebswelle 22 innerhalb des Rings 142, der Ring selbst, das Getriebegehäuse 12 und die darunter befindliche Einzugsvorrichtung 13 mitdrehen.

Ein Vorteil dieser Vorrichtung besteht darin, dass sich das untere Ende der Stange 144 in einer Nut 147 des Unterteils 14 a in radialer Richtung verschieben lässt, wodurch ein Freiheitsgrad bei der Anbringung der zuvor geschilderten Klemmvorrichtung und Drehmomentsperre gegeben ist, die sich somit an Werkzeugmaschinen verschiedener Typen und mit unterschiedlichen Durchmessern des Spindelgehäuses anbringen lässt.

### Bezugszeichenliste

- 10: Druckkopf
- 11: Spindel
- 12: Getriebegehäuse
- 13: Einzugsvorrichtung
- 14: Gegenhalter
- 14 a: Unterteil des Gegenhalters
- 14 b: Oberteil des Gegenhalters
- 15: Anzeigevorrichtung
- 16: Kühlvorrichtung
- 17: Andruckrollen
- 18: Andruckrollen
- 19: Stellrad
- 20: Schweißdraht
- 21: Öffnung
- 22: Antriebswelle
- 23: erstes kleineres Zahnrad
- 24: zweites größeres Zahnrad
- 25: Abtriebswelle
- 26: kleineres Kegelrad
- 27: größeres Kegelrad
- 28: Abtriebswelle
- 29: weiteres Zahnrad
- 30: Zwischenzahnrad
- 32: Welle
- 33: Werkstücktisch
- 34: Werkstück
- 35: Heizplatte
- 36: Trennfolie
- 41: Halterung
- 42: Lüfter
- 43: Element des Maschinengehäuses
- 44: Steilkegel
- 141: Klemmvorrichtung
- 142: Ring
- 143: Hülse
- 144: Stange
- 145: weitere Hülse
- 146: zylindrischer Abschnitt
- 147: Nut

## Patentansprüche

1. 3D-Druckvorrichtung umfassend einen Druckkopf (10), eine Heizvorrichtung, eine Einzugsvorrichtung (17, 18) für einen Schweißdraht (20) aus Kunststoff, einen Werkstücktisch (33) mit einer Auflageebene für das zu druckende Werkstück (34), Mittel zur Bewegung des zu druckenden Werkstücks (34) entlang mindestens zweier zueinander senkrechter Achsen, das heißt in X-Richtung und in Y-Richtung sowie Mittel zur Bewegung des Drucckopfs (10) in Z-Richtung, wobei über zwischen die rotierende Spindel (11) und die Einzugsvorrichtung (17, 18) für den Schweißdraht (20) geschaltete Getriebemittel (23, 24) die Rotationsbewegung der Spindel (11) direkt in eine Vorschubbewegung des Schweißdrahts (20) umgewandelt wird, wobei die Einzugsvorrichtung (17, 18) für den Schweißdraht (20) aus Kunststoff über den Spindelantrieb einer CNC-Maschine angetrieben wird, wobei die Mittel zur Bewegung des zu druckenden Werkstücks (34) in X-Richtung und in Y-Richtung sowie die Mittel zur Bewegung des Druckkopfs (10) in Z-Richtung über die Steuerung der CNC-Fräsmaschine gesteuert werden und die Antriebsachse des Spindelantriebs der rotierenden Spindel (11) der CNC-Maschine gleich oder parallel ausgerichtet ist zur Förderrichtung des Schweißdrahts (20) im Bereich vor dem Druckkopf (10), und wobei zwischen der Einzugsvorrichtung (17, 18) für den Schweißdraht (20) und dem Druckkopf (10) eine Kühlvorrichtung (16) angeordnet ist.

2. 3D-Druckvorrichtung nach Anspruch 1, **dadurch gekennzeichnet, dass** die Getriebemittel (23, 24) mindestens eine Untersetzungsstufe umfassen.

3. 3D-Druckvorrichtung nach Anspruch 2, **dadurch gekennzeichnet, dass** eine mit der Drehzahl der Spindel (11) rotierende Antriebswelle (22) mittels der mindestens einen Untersetzungsstufe eine mit geringerer Drehzahl als die Spindel rotierende Abtriebswelle (25) antreibt.

4. 3D-Druckvorrichtung nach einem der Ansprüche 2 oder 3, **dadurch gekennzeichnet, dass** die Getriebemittel mindestens zwei miteinander kämmende Kegelräder (26, 27) umfassen.

5. 3D-Druckvorrichtung nach einem der Ansprüche 1 bis 4, **dadurch gekennzeichnet, dass** die Getriebemittel mindestens eine erste Untersetzungsstufe sowie mindestens eine dieser nachgeschaltete zweite Untersetzungsstufe umfassen.

6. 3D-Druckvorrichtung nach einem der Ansprüche 1 bis 5, **dadurch gekennzeichnet, dass** mindestens eine Untersetzungsstufe mindestens eine Umlenkung der Drehrichtung der angetriebenen Welle (22) um 90 ° umfasst.

7. 3D-Druckvorrichtung nach einem der Ansprüche 1 bis 6, **dadurch gekennzeichnet, dass** die Einzugsvorrichtung für den Schweißdraht (20) wenigstens ein Paar Andruckrollen (17, 18) umfasst, welche den Schweißdraht (20) erfassen und eine lineare Vorschubbewegung des Schweißdrahts erzeugen.

8. 3D-Druckvorrichtung nach Anspruch 7, **dadurch gekennzeichnet, dass** eine Abtriebswelle (28) der Getriebemittel mindestens eine Andruckrolle (17) antreibt.

9. 3D-Druckvorrichtung nach einem der Ansprüche 7 oder 8, **dadurch gekennzeichnet, dass** mindestens zwei Paar Andruckrollen (17, 18) mit zueinander parallelen beabstandeten Drehachsen vorgesehen sind, die eine lineare Vorschubbewegung des Schweißdrahts (20) erzeugen.

10. 3D-Druckvorrichtung nach Anspruch 9, **dadurch gekennzeichnet, dass** zwei Drehachsen (28, 32) wenigstens jeweils einer Rolle eines Paars Andruckrollen (17, 18) über die Getriebemittel jeweils angetrieben werden.

11. 3D-Druckvorrichtung nach einem der Ansprüche 1 bis 10, **dadurch gekennzeichnet, dass** die beiden Drehachsen (28, 32) über ein Zwischenzahnrad (30) miteinander gekoppelt sind.

12. 3D-Druckvorrichtung nach einem der Ansprüche 1 bis 11, **dadurch gekennzeichnet, dass** ein Gegenhalter (14) zwischen Druckkopf (10) und angetriebener Spindel (11) angeordnet ist, welcher ein Mitdrehen des Druckkopfs (10) bei Rotation der Spindel (11) verhindert.

13. 3D-Druckvorrichtung nach einem der Ansprüche 1 bis 12, **dadurch gekennzeichnet, dass** eine auf einer auf dem Werkstücktisch (33) angeordneten Heizplatte (35) zur Erwärmung des Werkstücks (34) aufliegende zwischen Heizplatte und Werkstück angeordnete Trennfolie (36) vorgesehen ist.

14. 3D-Druckvorrichtung nach Anspruch 13, **dadurch gekennzeichnet, dass** der Kühlvorrichtung (16) ein Lüfter (42) zugeordnet ist, welcher einen Luftstrom auf die Kühlvorrichtung (16) bläst.

## Claims

1. A 3D printing device, comprising a printing head (10), a heating device, a draw-in device (17, 18) for a welding wire (20) of plastic, a work piece table (33) with a support plane for the work piece (34) to be printed, means for moving the work piece (34) to be printed along at least two axes that are perpendicularly to one another, that is in the X-direction and in the Y-direction as well as means for moving the printing heat (10) in the Z-direction, wherein via transmission means (23, 24) connected between the rotating spindle (11) and the draw-in device (17, 18) for the welding wire (20) the rotary motion of the spindle (11) is directly converted into a feeding motion of the welding wire (20), wherein the draw-in device (17, 18) for the welding wire (20) of plastic is driven via the spindle drive of a CNC machine, wherein the means for moving the work piece (34) to be printed are controlled in the X-direction and in the Y-direction as well as the means for moving the printing head (10) in the Z-direction are controlled via the control of the CNC milling machine and the drive axle of the spindle drive of the rotating spindle (11) of the CNC machine is orientated equal to or parallel to the feeding direction of the welding wire (20) in the region in front of the printing head (10), and wherein between the draw-in device (17, 18) for the welding wire (20) and the printing head (10) a cooling device (16) is arranged.

2. The 3D printing device according to Claim 1, **characterized in that** the transmission means (23, 24) comprise at least one step-down stage.

3. The 3D printing device according to Claim 2, **characterized in that** a driveshaft (22) rotating with the rotational speed of the spindle (11) drives, by means of the at least one step-down stage, an output shaft (25) rotating with a lower rotational speed than the spindle.

4. The 3D printing device according to any one of the Claims 2 or 3, **characterized in that** the transmission means comprise at least two inter-meshing bevel gears (26, 27).

5. The 3D printing device according to any one of the Claims 1 to 4, **characterized in that** the transmission means comprise at least one first step-down stage and at least one second step-down stage connected downstream of the former.

6. The 3D printing device according to any one of the Claims 1 to 5, **characterized in that** at least one step-down stage comprises at least one deflection of the direction of rotation of the driven shaft (22) by 90°.

7. The 3D printing device according to any one of the Claims 1 to 6, **characterized in that** the draw-in device for the welding wire (20) comprises at least one pair of pressure rollers (17, 18), which grip the welding wire (20) and generate a linear feeding motion of the welding wire.

8. The 3D printing device according to Claim 7, **characterized in that** an output shaft (28) of the transmission means drives at least one pressure roller (17) .

9. The 3D printing device according to any one of the Claims 7 or 8, **characterized in that** at least two pairs of pressure rollers (17, 18) with rotary axles spaced apart from one another parallel to one another are provided, which generate a linear feeding motion of the welding wire (20).

10. The 3D printing device according to Claim 9, **characterized in that** two rotary axles (28, 32) of in each case at least one roller of a pair of pressure rollers (17, 18) are each driven via the transmission means.

11. The 3D printing device according to any one of the Claims 1 to 10, **characterized in that** the two rotary axles (28, 32) are coupled to one another via an intermediate gear wheel (30).

12. The 3D printing device according to any one of the Claims 1 to 11, **characterized in that** a counter-holder (14) is arranged between printing head (10) and driven spindle (11), which prevents co-rotating of the printing head (10) upon rotation of the spindle (11).

13. The 3D printing device according to any one of the Claims 1 to 12, **characterized in that** a separating film (36) lying on a heating plate (35) for heating the work piece (34) arranged on the work piece table (33) arranged between heating plate and work piece is provided.

14. The 3D printing device according to Claim 13, **characterized in that** the cooling device (16) is assigned a fan (42), which blows an air stream onto the cooling device (16).

## Revendications

1. Dispositif d'impression 3D comprenant une tête d'impression (10), un dispositif de chauffage, un dispositif d'alimentation (17, 18) pour un fil de soudure (20) en plastique, une table de pièce (33) avec un plan de pose pour la pièce (34) à imprimer, des moyens de déplacement de la pièce (34) à imprimer le long d'au moins deux axes verticaux entre eux, c'est-à-dire dans le sens X et dans le sens Y ainsi que des moyens de déplacement de la tête d'impression (10) dans le sens Z, dans lequel, par des moyens de transmission (23, 24) montés entre la broche rotative (11) et le dispositif d'alimentation (17, 18) pour le fil de soudure (20), le mouvement de rotation de la broche (11) peut être converti directement en mouvement d'avancement du fil de soudure (20), dans lequel le dispositif d'alimentation (17, 18) pour le fil de soudure (20) en plastique est entraîné par l'entraînement à broche d'une machine CNC, dans lequel les moyens de déplacement de la pièce (34) à imprimer dans le sens X et dans le sens Y ainsi que les moyens de déplacement de la tête d'impression (10) dans le sens Z sont commandés par la commande de la fraiseuse à CNC et l'axe de l'entraînement de broche de la broche rotative (11) de la machine CNC est aligné de même manière ou parallèle par rapport au sens de transport du fil de soudure (20) dans la zone devant la tête d'impression (10), et dans lequel un dispositif de refroidissement (16) est disposé entre le dispositif d'alimentation (17, 18) pour le fil de soudure (20) et la tête d'impression (10).

2. Dispositif d'impression 3D selon la revendication 1, **caractérisé en ce que** les moyens de transmission (23, 24) comprennent au moins un étage de réduction.

3. Dispositif d'impression 3D selon la revendication 2, **caractérisé en ce qu'**un arbre d'entraînement (22) tournant avec la vitesse de la broche (11) au moyen de l'au moins un étage de réduction entraîne un arbre de sortie (25) tournant à une vitesse inférieure à la broche.

4. Dispositif d'impression 3D selon l'une des revendications 2 ou 3, **caractérisé en ce que** les moyens de transmission comprennent au moins deux roues coniques (26, 27) s'engrenant l'une avec l'autre.

5. Dispositif d'impression 3D selon l'une des revendications 1 à 4, **caractérisé en ce que** les moyens de transmission comprennent au moins un premier étage de réduction ainsi qu'au moins un second étage de réduction monté en aval de celui-ci.

6. Dispositif d'impression 3D selon l'une des revendications 1 à 5, **caractérisé en ce qu'**au moins un étage de réduction comprend au moins une déviation du sens de rotation de l'arbre entraîné (22) de 90°.

7. Dispositif d'impression 3D selon l'une des revendications 1 à 6, **caractérisé en ce que** le dispositif d'alimentation pour le fil de soudure (20) comprend au moins une paire de rouleaux de pression (17, 18) qui saisissent le fil de soudure (20) et produisent un mouvement d'avancement linéaire du fil de soudure.

8. Dispositif d'impression 3D selon la revendication 7, **caractérisé en ce qu'**un arbre de sortie (28) des moyens de transmission entraîne au moins un rouleau de pression (17) .

9. Dispositif d'impression 3D selon l'une des revendications 7 ou 8, **caractérisé en ce qu'**au moins deux paires de rouleaux de pression (17, 18) sont dotés d'axes de rotation parallèles distants l'un de l'autre, qui produisent un mouvement d'avancement linéaire du fil de soudure (20).

10. Dispositif d'impression 3D selon la revendication 9, **caractérisé en ce que** deux axes de rotation (28, 32) d'au moins respectivement un rouleau d'une paire de rouleaux de pression (17, 18) sont respectivement entraînés par les moyens de transmission.

11. Dispositif d'impression 3D selon l'une des revendications 1 à 10, **caractérisé en ce que** les deux axes de rotation (28, 32) sont couplés entre eux par une roue dentée intermédiaire (30).

12. Dispositif d'impression 3D selon l'une des revendications 1 à 11, **caractérisé en ce qu'**un contre-support (14) est disposé entre la tête d'impression (10) et la broche (11) entraînée, lequel empêche une rotation conjointe de la tête d'impression (10) lors de la rotation de la broche (11).

13. Dispositif d'impression 3D selon l'une des revendications 1 à 12, **caractérisé en ce qu'**il est prévu une feuille de séparation (36) reposant sur une plaque chauffante (35) pour chauffer la pièce (34) disposée sur la table de pièce (33), disposée entre la plaque chauffante et la pièce.

14. Dispositif d'impression 3D selon la revendication 13, **caractérisé en ce qu'**un ventilateur (42) est attribué au dispositif de refroidissement (16), lequel souffle un flux d'air sur le dispositif de refroidissement (16) .
